# FASCICULE DE BREVET EUROPEEN

(11) **EP 0 797 017 B1**
(45) Date de publication et mention de la délivrance du brevet: **11.04.2001**
(21) Numéro de dépôt: 97400423.6
(22) Date de dépôt: 26.02.1997
(51) Int. Cl.: F16D 13/64, F16D 69/04

(54) **Disque à garnitures de friction pour embrayage mécanique**
Scheibe mit Reibbelägen für mechanische Kupplung
Disc with friction linings for mechanical clutch

(30) Priorité: 27.02.1996 FR 9602403
(43) Date de publication de la demande: 24.09.1997
(73) Titulaire: VALEO, 75017 Paris (FR)
(72) Inventeur: Viola, Paolo, 75007 Paris (FR)
(74) Mandataire: Gamonal, Didier

(56) Documents cités:
- EP-A- 0 110 599
- WO-A-94/21934
- DE-A- 3 643 274
- PATENT ABSTRACTS OF JAPAN vol. 006, no. 026 (M-112) & JP 56 143818 A (NISSAN)

## Description

La présente invention concerne un disque à garnitures de friction pour embrayage mécanique, ce disque comportant dans sa région périphérique, entourant sa partie centrale, des zones de fixation globalement parallèles au plan de ladite partie centrale, d'une part pour une première garniture annulaire ou divisée en plots, destinée à entrer en contact de frottement avec le plateau de pression de l'embrayage, d'autre part pour une seconde garniture également annulaire ou divisée en plots, destinée à entrer en contact de frottement avec le plateau de réaction de cet embrayage.

Ladite région périphérique du disque peut être annulaire et continue, mais elle est couramment fractionnée en pales radiales portant les zones de fixation précitées, ces pales étant reliées à la partie centrale du disque par un pied et servant alternativement à la fixation de la première garniture et à la fixation de la seconde garniture. Les pales peuvent être d'un seul tenant avec la partie centrale du disque, ou lui être reliées par des rivets. Les pales destinées à assurer la fixation d'une garniture peuvent avoir une forme différente de celle des pales destinées à assurer la fixation de l'autre garniture, et ces formes peuvent en elles-mêmes être très variées, en fonction de l'effet recherché ou des impératifs de la fabrication.

Ces pales peuvent aussi avoir toutes la même forme, par exemple une forme en drapeau, et être pliées dans un sens et dans l'autre pour présenter elles-mêmes des zones de fixation servant alternativement à la fixation de l'une des garnitures et de l'autre garniture.

Des exemples de pales de ces différents types sont fournis dans les documents EP-A-0 579 554 (US-A-5,452,783) et FR-A-2 370 893. Pour augmenter la rigidité de la fixation des garnitures et pour obtenir une usure plus régulière de ces garnitures, sans incrustations, il est fréquent, et c'est le cas dans les deux documents précités, de prévoir sur chaque pale, par exemple de part et d'autre de sa zone de fixation sur la garniture concernée, des zones de portée supplémentaires décalées axialement vers l'autre garniture et pouvant servir d'appui à celle-ci.

Ceci étant, la fonction d'un tel disque appartenant à un disque de friction pour embrayage mécanique, dont l'application trouve bien entendu sa plus grande extension dans le domaine de l'automobile, est suffisamment connue du technicien de ce domaine pour n'avoir pas besoin d'être décrite en détail. Il suffira de rappeler (figure 7) que lorsque la pédale d'embrayage est relâchée, les deux garnitures 101,102 du disque 100 sont sous charge et solidaires, par serrage entre les plateaux de pression 103 et de réaction 104, en rotation du plateau de pression et du plateau de réaction, lequel est entraîné par le vilebrequin du moteur. Le disque porte-garnitures 100 entraîne alors, par l'intermédiaire de ressorts 107 ou directement, un voile 105 engrené, avec ou sans jeu circonférentiel, avec un moyeu central 106 lui-même en prise avec l'arbre d'entrée de la boîte de vitesses, qui se trouve par suite entraîné par le vilebrequin. Un tel fonctionnement est rappelé dans la demande PCT/FR94/00297 (WO 94/21934), en même temps qu'une grande variété de formes de pales radiales, dont les pales tripodes.

Dans une forme de réalisation de cette demande WO-A-94/21934 la fixation des garnitures est réalisée par collage et la région périphérique comporte des pales dotées de lignes de pliage séparant une zone centrale, formant zone de fixation de zones de portées supplémentaires.

Les garnitures sont collées sur la zone centrale des pales. Les zones centrales des pales sont surélevées par rapport à la partie centrale du disque, du fait qu'elles sont décalées axialement par rapport à ladite partie centrale.

La présente invention concerne plus particulièrement la fixation des garnitures sur les pales de ces disques.

Le problème est de deux ordres :
1°) la présence, sur les pales, de zones de portées supplémentaires, évoquée plus haut, provoque une tendance au fléchissement des pales dans leur zone centrale lorsqu'elles sont mises sous charge entre les plateaux de pression et de réaction ou pour l'encollage. Par suite, la portée offerte par ces pales à la garniture tend à se concentrer sur les plis, que l'assemblage entre pales et garnitures soit assuré par collage ou par rivets, d'où risque d'empreintes sur les garnitures ;
2°) lorsque l'on procède à une fixation par collage, le problème se pose de la délimitation de la surface de pale encollée. L'encollage est réalisé par le dépôt de gouttes de colle, concentrées au milieu de la pale. L'assemblage est alors réalisé par mise en pression de la pale sous 20 bars ; il en résulte que la colle s'étale sur une surface irrégulière, aux contours indéfinis, et sur laquelle on ne peut agir, dans une certaine mesure, qu'en réglant soigneusement les paramètres (quantité de colle et pression).

Dans ces conditions il arrive fréquemment que la colle déborde sur la pale, par rapport à la surface de celle-ci qui doit être en contact avec la garniture. Lorsque la zone de fixation ou pale, et c'est le cas notamment des pales tripodes, comporte des pliages pour la réalisation des zones de portée supplémentaire, il peut même arriver que la colle déborde sur les plis, ce qui nuit à leur fonction en les raidissant, avec même un risque de blocage par les bavures.

Le but de la présente invention est d'éliminer ces inconvénients, et à cet effet un disque à garnitures de friction du type général défini au début, dans lequel au niveau de chaque zone de fixation, au moins l'une des deux surfaces de contact entre garniture de friction et ladite région périphérique est constituée par une partie plane surélevée et dans lequel ladite région périphérique est divisée en pales comportant des lignes de pliage, séparant une zone centrale, formant zone de fixation, de zones de portées supplémentaires est caractérisé en ce que lesdites parties planes surélevées sont prévues sur les zones centrales desdites pales à l'écart desdites lignes de pliage.

Dans le cas de fixation des garnitures sur les pales par collage, la surface correspond à la surface prévue pour l'encollage. On appréciera que ces parties surélevées seront très faciles à réaliser par emboutissage, moyennant une modification minime de l'outil de cambrage. Un déport très faible, par exemple de 0,2 mm, sera en général suffisant pour éviter alors les bavures de colle en dehors de la stricte zone de fixation : du fait des forces de capillarité, la colle s'arrêtera automatiquement, en cas de léger surdosage, au contour de ladite partie surélevée, sans pouvoir envahir les zones de pliage des pales.

Ces parties planes surélevées auront aussi comme avantage de procurer un raidissement des pales, et d'éviter les flexions mentionnées plus haut, lors de la mise sous charge entre les plateaux de pression et de réaction ou pour l'opération d'encollage. Cet avantage de raidissement sera toutefois également obtenu dans le cas où l'assemblage entre le disque et les garnitures est réalisé par rivetage. D'une manière générale le raidissement permet d'obtenir une usure plus régulière des garnitures tout en conservant une bonne progressivité lors de l'opération d'embrayage.

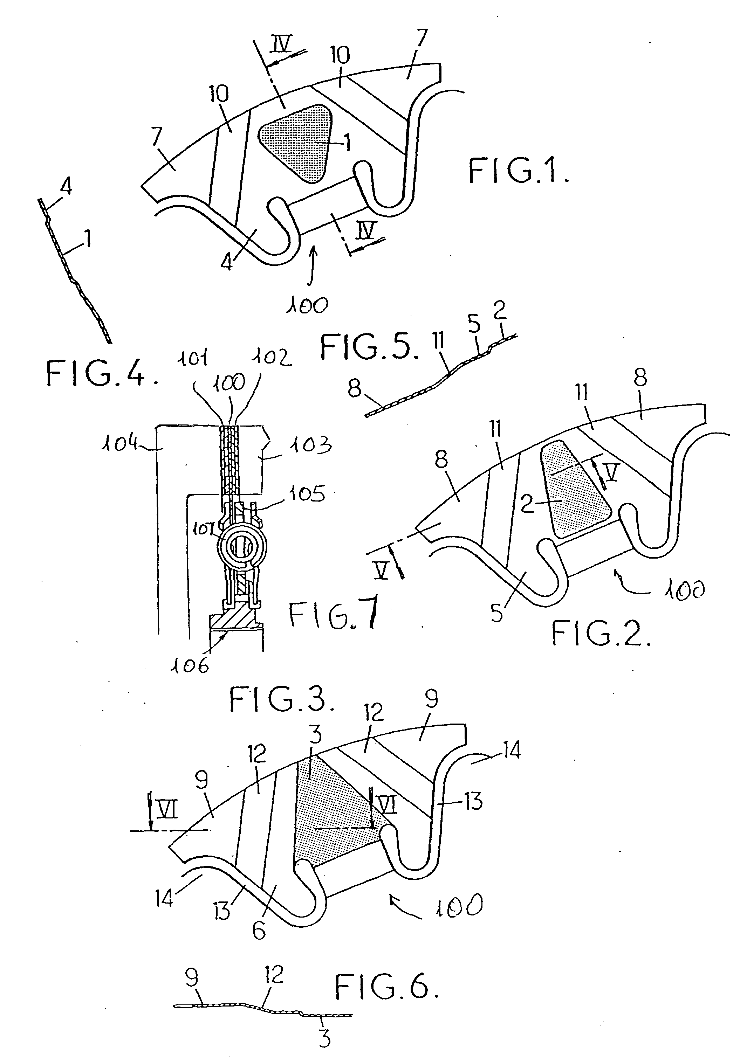

Des modes de réalisation de l'invention ont été représentés à titre d'exemples nullement limitatifs sur les figures du dessin ci-annexé dans lequel les figures 1 à 3 sont des vues de face partielles de la région périphérique d'un disque 100 à garnitures de friction conforme à l'invention, du type à pales découpées du genre dit "tripode", montrant différentes formes et dimensions pour les parties planes surélevées des pales, les figures 4 à 6 étant respectivement des vues en coupe selon les lignes IV-IV, V-V et VI-VI des figures 1 à 3, tandis que la figure 7 est une demi-vue schématique en coupe axiale qui montre l'embrayage mécanique pour la position de serrage des garnitures du disque.

Sur ces figures, les parties planes surélevées ont été représentées en grisé et sont référencées respectivement en 1, 2 et 3 ; elles constituent des zones en relief et sont effectuées par emboutissage, sur une profondeur de l'ordre de 0,2 mm, sur la zone centrale des pales ou zone de fixation, respectivement référencée en 4, 5 et 6. Ces zones centrales sont séparées de zones de portée supplémentaires, respectivement 7, 8 et 9 (dont le rôle a été indiqué plus haut) par des parties pliées, respectivement 10, 11 et 12, ici en forme de V renversé. Pour plus de précisions on se reportera au document US-A-5,452,783 ou à son correspondant EP-A-0 579 554.

Pour mémoire on rappellera que les zones centrales 4,5,6 sont chacune décalées axialement à la faveur d'un pli tangentiel, délimité par deux bords parallèles (non référencé), par rapport à la partie centrale du disque 100. Ce pli tangentiel appartient au pied reliant la zone centrale 4,5,6 à la partie centrale du disque. Les zones centrales 4 à 6 sont donc surélevées par rapport à la partie centrale du disque 100. Les plis 10,11,12 sont inclinés en direction de la périphérie externe de la pale considérée. Les zones de portées supplémentaires 7,8,9 sont décalées axialement par rapport aux parties centrales 4,5,6 à la faveur desdits plis 10,11,12. Grâce aux plis chaque pale présente à sa périphérie externe trois zones de portée et à sa périphérie interne une zone de portée.

Bien entendu les pales peuvent être du type de celles décrites dans le document FR-A-2 370 893 en sorte que les zones centrales 4 à 6 peuvent ne pas être surélevées.

Ceci étant, on voit sur les dessins que les parties planes surélevées destinées à l'encollage sont prévues largement à l'intérieur de ces parties pliées, ce qui évite que la colle ne parvienne à leur niveau, même en cas d'excès, ce qui évite la dispersion et préserve le bon comportement du disque, même à chaud. On obtient en outre un raidissement des pales dans leurs zones centrales de fixation, s'opposant à la tendance de la pale à se mettre en creux lors du pressage, lorsque l'embrayage est en position embrayée sous l'action de moyens élastiques à action axiale, tels qu'un diaphragme, sollicitant le plateau de pression en direction du plateau de réaction pour serrage des garnitures.

Le raidissement de la pale est particulièrement privilégié dans le mode de réalisation de la figure 1, du fait que la base de triangle que forme la zone en relief 1 est du côté de la périphérie externe du disque.

Les impératifs du collage sont par contre privilégiés dans le mode de réalisation de la figure 2, la base du triangle que forme la zone en relief 2 étant située du côté du centre du disque, ce qui permet d'augmenter l'espace entre les bords de cette zone et les parties pliées 11. De plus, le centre de gravité de la surface de liaison encollée entre la pale et le disque de friction étant décalé vers l'intérieur, permet de réduire le bras de levier présent après écartement à chaud des garnitures par suite de l'effet de bilame.

Le mode de réalisation de la figure 3, enfin, est une variante du précédent, avec une base du triangle 3 encore élargie et s'étendant entre la base des fentes arquées 13 qui séparent la pale tripode concernée des deux pales voisines plus étroites 14. Ce mode de réalisation est en outre plus simple à réaliser du point de vue de l'outillage.

On appréciera que l'invention est particulièrement avantageuse dans le cadre de pales "tripodes" car la zone centrale de fixation 4,5,6 de la garniture concernée a une grande étendue. Lors du réembrayage de l'embrayage on obtient une bonne progressivité de serrage des garnitures car les plis 10,11,12 ne sont pas bloqués par la colle.

A chaud on suit bien la déformation des plateaux de pression et de réaction grâce au pli présent au niveau du pied de raccordement des zones 4,5,6 à la partie centrale.

Bien entendu, en variante, la fixation peut être réalisée par rivetage, les parties surélevées 1,2,3 étant alors trouées.

## Revendications

1. Disque (100) à garnitures de friction pour embrayage mécanique, comportant dans sa région périphérique entourant sa partie centrale, des zones de fixation (4, 5, 6) globalement parallèles au plan de ladite partie centrale, d'une part pour une première garniture (102) annulaire ou divisée en plots, destinée à entrer en contact de frottement avec le plateau de pression (103) de l'embrayage, d'autre part pour une seconde garniture (101) également annulaire ou divisée en plots, destinée à entrer en contact de frottement avec le plateau de réaction (104) de cet embrayage, dans lequel au niveau de chaque zone de fixation (4, 5, 6), au moins l'une des deux surfaces de contact entre une garniture de friction (101, 102) et ladite région périphérique est constituée par une partie plane surélevée (1,2,3) et dans lequel ladite région périphérique est divisée en pales comportant des lignes de pliage (10,11,12), séparant une zone centrale, formant zone de fixation (4,5,6), de zones de portée supplémentaires (7,8,9), caractérisé en ce que lesdites parties planes surélevées (1,2,3) sont prévues sur les zones centrales desdites pales à l'écart desdites lignes de pliage.

2. Disque selon la revendication 1, caractérisé en ce que lesdites lignes de pliage (10,11,12) s'étendent selon un V, et en ce que lesdites parties planes surélevées (1,2,3) ont la forme de triangles, dont les côtés sont écartés desdites lignes de pliage.

3. Disque selon la revendication 2, caractérisé en ce que la base desdits triangles s'étend vers l'intérieur, c'est-à-dire du côté de la base des pales.

4. Disque selon l'une quelconque des revendications précédentes, dans lequel la fixation des garnitures de friction (101, 102) sur sa région périphérique est assurée par collage, caractérisé en ce que la surface desdites parties planes surélevées (1,2,3) correspond à la surface prévue pour l'encollage au niveau de chaque zone de fixation (4, 5, 6).

## Claims

1. Disc (100) with friction linings for a mechanical clutch, having, in its peripheral region surrounding its central part, fixing zones (4, 5, 6) roughly parallel to the plane of the said central part, on the one hand for a first lining (102) which is annular or divided into blocks, intended to come into rubbing contact with the pressure plate (103) of the clutch, and on the other hand for a second lining (101), also annular or divided into blocks, intended to come into rubbing contact with the reaction plate (104) of this clutch, in which, at each fixing zone (4, 5, 6) at least one of the two contact surfaces between a friction lining (101, 102) and the said peripheral region consists of a raised flat part (1, 2, 3) and in which the said peripheral region is divided into blades having folding lines (10, 11, 12) separating a central zone, forming a fixing zone (4, 5, 6), from supplementary bearing zones (7, 8, 9), characterised in that the said raised flat parts (1, 2, 3) are provided on the central zones of the said blades away from the said folding lines.

2. Disc according to Claim 1, characterised in that the said folding lines (10, 11, 12) extend in a V, and in that the said raised flat parts (1, 2, 3) are in the shape of triangles, whose sides are away from the said folding lines.

3. Disc according to Claim 2, characterised in that the base of the said triangles extends inwards, that is to say on the side of the base of the blades.

4. Disc according to any one of the preceding claims, in which the friction linings (101, 102) are fixed to its peripheral region by adhesive bonding, characterised in that the surface of the said raised flat parts (1, 2, 3) corresponds to the surface provided for the bonding at the level of each fixing zone (4, 5, 6).

## Patentansprüche

1. Reibbeläge tragende Scheibe (100) für eine mechanische Kupplung, umfassend in ihrem Umfangsbereich, der ihren Mittelteil umgibt, zur Ebene des besagten Mittelteils im wesentlichen parallele Befestigungszonen (4, 5, 6) einerseits für einen ersten ringförmigen oder in Reibplättchen unterteilen Reibbelag (102), der dazu bestimmt ist, mit der Druckplatte (103) der Kupplung in Reibkontakt zu treten, andererseits für einen zweiten, ebenfalls ringförmigen oder in Reibplättchen unterteilten Reibbelag (101), der dazu bestimmt ist, mit der Gegenanpreßplatte (104) dieser Kupplung in Reibkontakt zu treten, wobei in Höhe jeder Befestigungszone (4, 5, 6) wenigstens eine der zwei Kontaktflächen zwischen einem Reibbelag (101, 102) und dem besagten Umfangsbereich aus einem erhöhten ebenen Teil (1, 2, 3) besteht und wobei der besagte Umfangsbereich in Segmente unterteilt ist, die Biegelinien (10, 11, 12) umfassen, die eine als Befestigungszone (4, 5, 6) dienende mittlere Zone von zusätzlichen Auflagezonen (7, 8, 9) trennen, **dadurch gekennzeichnet**, daß die besagten erhöhten ebenen Teile (1, 2, 3) auf den mittleren Zonen der besagten Segmente in einem Abstand von den besagten Biegelinien vorgesehen sind.

2. Scheibe nach Anspruch 1, **dadurch gekennzeichnet,** daß sich die besagten Biegelinien (10, 11, 12) entsprechend einem V erstrecken und daß die besagten erhöhten ebenen Teile (1, 2, 3) die Form von Dreiecken haben, deren Seiten von den besagten Biegelinien beabstandet sind.

3. Scheibe nach Anspruch 2, **dadurch gekennzeichnet,** daß sich die Basis der besagten Dreiecke nach innen, das heißt auf der Seite der Basis der Segmente, erstreckt.

4. Scheibe nach einem der vorangehenden Ansprüche, bei der die Befestigung der Reibbeläge (101, 102) an ihrem Umfangsbereich erfolgt, **dadurch gekennzeichnet,** daß die Oberfläche der besagten erhöhten ebenen Teile (1, 2, 3) der für die Verklebung in Höhe jeder Befestigungszone (4, 5, 6) vorgesehenen Oberfläche entspricht.
